Europäisches Patentamt

European Patent Office

Office européen des brevets

(11) Numéro de publication: **0 237 428**
**A1**

# (12) DEMANDE DE BREVET EUROPEEN

(21) Numéro de dépôt: 87400513.5

(22) Date de dépôt: 09.03.87

(51) Int. Cl.⁴: **G 05 D 23/275**
**H 01 H 37/14**

(30) Priorité: 10.03.86 FR 8603341

(43) Date de publication de la demande:
16.09.87 Bulletin 87/38

(84) Etats contractants désignés:
AT BE CH DE ES GB GR IT LI LU NL SE

(71) Demandeur: AIRELEC INDUSTRIES
32, rue du Landy
F-93308 Aubervilliers Cédex (FR)

(72) Inventeur: Nonclerq, Jean-Claude
3 square des Glycines
Le Colombier F-95470 Survilliers (FR)

(74) Mandataire: Moncheny, Michel et al
c/o Cabinet Lavoix 2 Place d'Estienne d'Orves
F-75441 Paris Cedex 09 (FR)

(54) Ensemble de thermostat compensé.

(57) Ensemble de thermostat compensé comprenant un thermostat pourvu d'un élément sensible (8) destiné à être placé à proximité de la résistance de chauffage (1) d'un convecteur électrique, caractérisé en ce que ledit élément sensible (8) comporte une première partie (8a) placée dans un premier espace (12) en relation directe de rayonnement avec la résistance chauffante (1) et une seconde partie (8b) placée dans un second espace (11) contigû au premier et séparé de celui-ci par une cloison (16), ledit second espace constituant une cheminée et étant pourvu de moyens (15) de mise en circulation de l'air froid ambiant et en ce qu'il est prévu des moyens d'actionnement desdits moyens (15) de mise en circulation de l'air dans le second espace (11) pendant les périodes d'interruption de l'alimentation de la résistance de chauffage (1).

EP 0 237 428 A1

## Description

Ensemble de thermostat compensé.

La présente invention est relative aux convecteurs électriques de chauffage et se rapporte plus particulièrement aux thermostats équipant les convecteurs.

Les convecteurs électriques de chauffage doivent d'une part répondre aux exigences de sécurité et d'autre part satisfaire à deux critères de bon fonctionnement:
- un faible différentiel de température mesuré dans la pièce chauffée, lors d'une succession de cycles de régulation;
- une faible dérive, assurant l'indépendance de la température dans la pièce chauffée vis à vis de la puissance moyenne nécessaire ou encore de la tempéture extérieure.

Pour assurer la régulation les convecteurs comportent un thermostat. Celui-ci peut être électronique ou mécanique.

Les thermostats mécaniques, moins onéreux sont de types a bilame ou à action d'un fluide (tension de vapeur ou dilatation d'un liquide).

Les thermostats à action de fluide comportent un volume de fluide sous forme soit d'un bulbe soit d'un tube capillaire.

Un thermostat est caractérisé par son différentiel statique de température mesuré lorsque le milieu qui l'environne est immobile.

Le "différentiel" dynamique du convecteur est celui mesuré dans des conditions normalisées, au milieu de la pièce chauffée.

Il est bien évidemment différent du différentiel statique. Cependant, il varie dans le même sens que celui-ci.

L'élément sensible du thermostat, s'il n'est influencé que par l'air froid entrant au bas du convecteur, met très longtemps à détecter une élévation de température dans la pièce.

Pour obtenir que le différentiel d'un convecteur soit de l'ordre de 2° ou moins, un procédé connu consiste à accélérer artificiellement l'élément sensible du thermostat à l'aide d'une petite résistance de chauffage branchée en parallèle avec la résistance de chauffage principale.

Ce procédé appelé procédé d'accélération simple présente l'inconvénient de provoquer une dérive importante car le thermostat n'est plus sensible à la température d'entrée d'air.

D'autres procédés connus, dits d'accélération compensée consistent à utiliser deux résistances auxiliaires influençant le thermostat, l'une en parallèle avec la résistance principale, l'autre alimentée en permanence.

L'une ou l'autre de ces résistances peut être une thermistance assurant une différence de température importante entre l'élément sensible du thermostat et l'air entrant dans le convecteur.

Un tel procédé présente l'inconvénient d'une sensibilité insuffisante à la température de l'air entrant.

Ainsi, lors d'une première chauffe dans un local froid, la montée en température se fait par paliers, avec des arrêts prématurés.

Par ailleurs, lorsqu'un différentiel de convecteur très faible (inférieur à 0,5° K) est souhaité, la mise en oeuvre d'un procédé compensé nécessite l'emploi d'un thermostat ayant un différentiel statique très faible, imcompatible avec la technique ordinaire des thermostats mécaniques.

Par conséquent, un réglage spécial entre contacts du thermostat, de la tension du ressort de celui-ci, etc, est rendu nécessaire, ce qui accroit le coût et entraine des risques de non-qualité des appareils de ce type.

L'invention vise à remédier aux inconvénients des thermostats compensés de la technique antérieure en créant un ensemble de thermostat qui, tout en étant de construction très simple permette d'assurer à un convecteur dans lequel il est monté un bon différentiel dynamique et une faible dérive.

Elle a donc pour objet un ensemble de thermostat compensé comprenant un thermostat pourvu d'un élément sensible destiné à être placé à proximité de la résistance de chauffage d'un convecteur électrique, caractérisé en ce que ledit élément sensible comporte une première partie placée dans un premier espace en relation directe de rayonnement avec la résistance chauffante et une seconde partie placée dans un second espace contigû au premier et séparé de celui-ci par une cloison, ledit second espace constituant une cheminée et étant pourvu de moyens de mise en circulation de l'air froid ambiant et en ce qu'il est prévu des moyens d'actionnement desdits moyens de mise en circulation de l'air dans le second espace pendant les périodes d'interruption de l'alimentation de la résistance de chauffage.

L'invention sera mieux comprise à l'aide de la description qui va suivre, donnée uniquement à titre d'exemple et faite en se référant aux dessins annexés, sur lesquels :
- la Fig.1 est une vue schématique en élévation de l'ensemble de thermostat compensé suivant l'invention;
- la Fig.2 est une vue en perspective écla tee d'un boitier qui entre dans la construction de l'ensemble de thermostat de la Fig.1; et
- la Fig.3 est une vue en perspective d'une partie d'un convecteur électrique montrant l'emplacement du thermostat compense suivant l'invention.

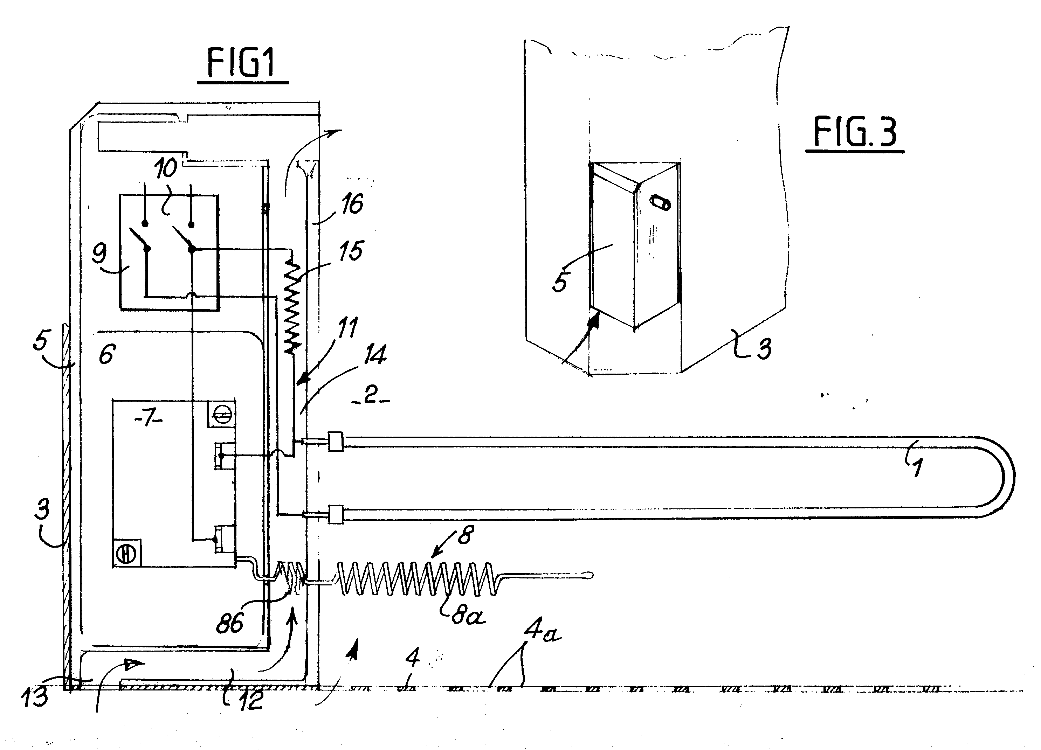

L'ensemble de thermostat représenté à la Fig.1 est considéré comme étant appliqué à un convecteur électrique comportant une résistance de chauffage 1, à fil nu ou a tube de blindage en acier avec ou sans diffuseur, ledit diffuseur pouvant être en aluminium ou autre matèriau. La résistance de chauffage 1 est disposée dans une enceinte 2 délimitée par des parois 3. La paroi inférieure 4 formant grille est pourvue d'orifices 4a d'admission dans l'enceinte de l'air froid se trouvant dans la partie proche du sol d'une pièce a chauffer.

A l'intérieur de l'enceinte 2 est disposé un boîtier 5 en matière isolante, par exemple en matière plastique moulée. Le boîtier 5 comporte un comparti-

ment 6 dans lequel est monté un thermostat 7 dont l'élément sensible est par exemple constitué par un tube capillaire 8 hélicoïdal et un compartiment 9 pour un interrupteur 10 de connexion du thermostat 7 au sec teur.

Le boîtier 5 comporte de plus un compartiment 11 comportant une première partie horizontale 12 mise en communication avec l'extérieur par un orifice 13 d'entrée d'air froid et une partie verticale 14 débouchant à l'interieur de l'enceinte 2 et dans laquelle est disposée une résistance électrique 15 de faible puissance, typiquement de 3 Watt dont l'échauffement est destiné à engendrer un appel d'air froid dans la cheminée ainsi constituée par les parties 12 et 14 du compartiment 11.

La paroi extérieure 16 du boîtier 5 constitue une séparation entre l'intérieur du boîtier 5 et en particulier son compartiment 11 formant cheminée et le reste de l'enceinte 2.

L'élément sensible 8 comporte une première partie 8a placée dans l'enceinte 2 à l'extérieur de la paroi 16 du boîtier 5, en relation d'échange thermique par rayonnement avec la résistance de chauffage 1 et une seconde partie 8b disposée dans le compartiment 11 formant cheminée.

La résistance électrique 15 de mise en circulation de l'air dans le compartiment 11 est connectée dans le présent exemple en parallèle sur les bornes du thermostat 7.

Avantageusement, la première partie 8a de l'élément sensible 8 qui est influencée par le rayonnement issu de la résistance de chauffage est peinte en noir ou recouverte d'un autre revêtement approprié de façon à favoriser l'absorption du rayonnement et ainsi augmenter l'influence accélératrice.

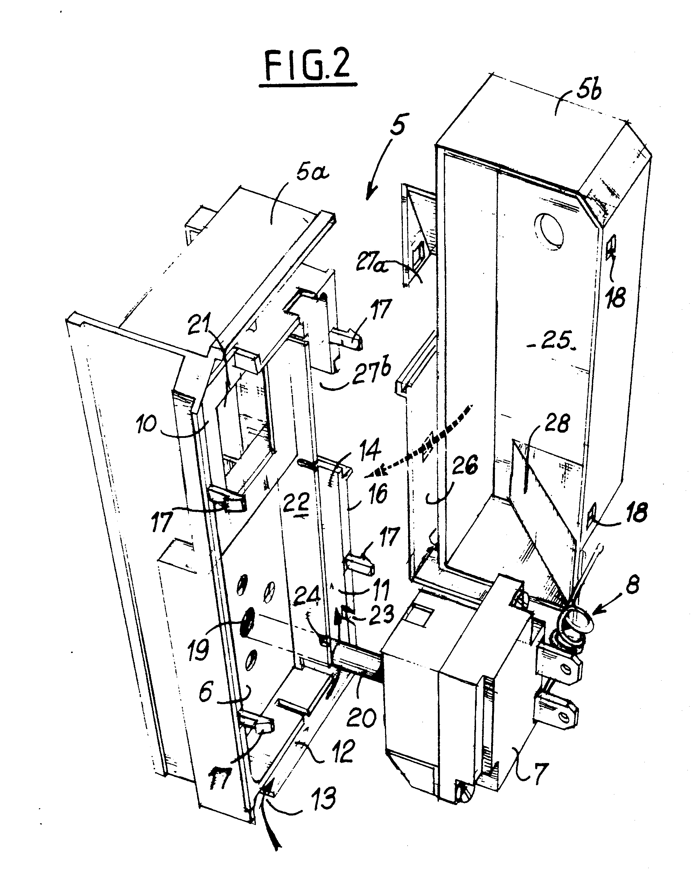

Comme représenté à la Fig.2, le boîtier 5 est réalise en deux demi-boîtiers 5a et 5b en matière thermoplastique moulée dont l'assemblage est assuré par des crochets élastiques 17 venus de matière, prévus sur les bords formant le plan de joint du demi-boîtier 5a avec le demi-boîtier 5b, ces crochets coopérant avec des lumières 18 ménagées dans les surfaces latérales du demi-boîtier 5b.

Le compartiment 6 de réception du thermostat 7 comporte un trou central 9 pour le passage de la tige de manoeuvre 20 du thermostat.

Le compartiment 10 pour l'interrupteur 9 comporte un évidement 21 permettant l'accès au bouton de manoeuvre de l'interrupteur à partie de l'extérieur du boîtier.

Le compartiment 11 formant cheminée est délimité d'une part par la paroi extérieure 16 du boîtier et d'autre part par une paroi intérieure 22. Des échancrures 23, 24 sont ménagées respectivement dans les portions de parois 11 et 22 du boîtier 5a afin de permettre le passage de l'extrémité de l'élément sensible 8 reliée au thermostat 7.

Le demi-boîtier 5b forme couvercle et comporte une première partie 25 destinée à recouvrir les compartiment 6 et 10 de réception du thermostat 7 et de l'interrupteur 9 et une seconde partie 26 complétant le compartiment 11 formant cheminée. La paroi extérieure du demi-boîtier 5b qui délimite ce compartiment 11 comporte une découpe 27a complétée par une découpe correspondante 27b ménagée dans le demi-boîtier 5a. Ces deux découpes forment lorsque le boîtier est assemblé un logement pour une plaque non représentée d'assemblage des extrémités de la résistance de chauffage 1 au boîtier.

Dans le mode de réalisation représenté à la Fig.2, le demi-boîtier formant couvercle comporte une partie rentrante 28 adaptée à la forme de la paroi du convecteur et permettant le montage du boîtier dans un angle du convecteur, de la manière représentée à la Fig.3.

Le fonctionnement de l'ensemble de thermostat qui vient d'être décrit est le suivant.

Lorsque la résistance de chauffage 1 est alimentée, une partie importante de la puissance créée par effet Joule dans la résistance, est émise sous forme de rayonnement, la partie restante étant entraînée par la convection de l'air en mouvement. La partie 8a de l'élément sensible 8 s'échauffe rapidement par rayonnement, la vitesse d'échauffement étant accélérée par le revêtement de peinture noire prévu sur la partie 8a.

La résistance de faible puissance 15 qui est en parallele sur bornes du thermostat 7, est courtcircuité par celui-ci et ne s'échauffe donc pas.

Lorsque l'élément sensible 8 est suffisamment échauffé pour provoquer la coupure du thermostat 7, la résistance de faible puissance 15 est alors branchée en série avec la résistance principale 1. La répartition des tensions par les valeurs ohmiques respectives des deux résistances est telle que la résistance 1 n'émet qu'une infime partie de sa puissance nominale typiquement 1/100.000, alors que la résistance 15 émet sa puissance nominale.

L'échauffement de la résistance de faible puissance 15 provoque un appel d'air par convection dans le compartiment 11 formant cheminée du boîtier 6 et de l'air froid entrant par l'orifice d'admission 13 de cette cheminée, provoque par contact avec la partie 8b de l'élément sensible 8, un refroidissement accéléré de cet élément.

La partie horizontale de la cheminée 11 permet de déporter l'entrée d'air 13 le plus loin possible vers l'extérieur du convecteur et donc en dehors de la zone d'influence par rayonnement de la résistance de chauffage 1 au-dessous de la grille d'admission du convecteur 1.L'air admis dans la cheminée 11 est donc plus froid, et l'accélération à l'enclenchement, plus efficace.

On voit donc que grace à un tel agencement, les intervalles de temps s'écoulant entre la coupure de la résistance de chauffage 1 et sa réalimentation sont considérablement réduits, ce qui permet d'obtenir avec un thermostat ordinaire, un différentiel dynamique du convecteur nettement amélioré par rapport aux performances des convecteurs classiques.

Dans le présent exemple, le thermostat 7 se trouve dans un compartiment 6 du boîtier 5 séparé de l'élément sensible. Le compartiment 6 constitue un espace fermé et assure la protection de la tête du thermostat vis à vis des deux influences de radiation et de convection par l'air froid.

Par ailleurs, il est également possible d'assurer au thermostat une température constamment supérieure à celle de l'air froid, par exemple en réduisant la section des conducteurs électriques de connexion, ce qui accroît légèrement leur résistance. Il en résulte une meilleure efficacité de l'influence de l'air froid sur la partie 8b de l'élément sensible 8 disposé dans le compartiment 11 formant cheminée.

Suivant un mode de réalisation avantageux de l'invention, les parties 8a et 8b de l'élément sensible 8 sont à peu près de même longueur.

L'ensemble de thermostat qui vient d'être décrit comporte un thermostat à élément sensible capillaire. On comprendra cependant que l'invention s'applique également à des thermostats pourvus d'éléments sensibles en forme de bulbe.

L'action sur le contact du thermostat peut être exercée par la dilatation d'un liquide ou par l'augmentation de la pression de vapeur saturante d'un équilibre liquide-vapeur. Dans ce dernier cas, l'action est plus rapide et semble constituer la solution la plus adaptée à l'invention.

Dans le cas d'un thermostat monobloc, à bilame par exemple, il est également possible, selon la construction des thermostats, de disposer l'élément sensible dans les deux espaces définis plus haut.

## Revendications

1. Ensemble de thermostat compensé comprenant un thermostat pourvu d'un élément sensible (8) destiné à être placé à proximité de la résistance de chauffage (1) d'un convecteur électrique, caractérisé en ce que ledit élément sensible (8) comporte une première partie (8a) placée dans un premier espace (12) en relation directe de rayonnement avec la résistance chauffante (1) et une seconde partie (8b) placée dans un second espace (11) contigû au premier et séparé de celui-ci par une cloison (16), ledit second espace constituant une cheminée et étant pourvu de moyens (15) de mise en circulation de l'air froid ambiant et en ce qu'il est prévu des moyens d'actionnement desdits moyens (15) de mise en circulation de l'air dans le second espace (11) pendant les périodes d'interruption de l'alimentation de la résistance de chauffage (1).

2. Ensemble de thermostat suivant la revendication 1, caractérisé en ce que ladite première partie (8a) de l'élément sensible (8) est recouverte d'un revêtement absorbant le rayonnement de la résistance de chauffage (1).

3. Ensemble de thermostat suivant la revendication 2, caractérisé en ce que ledit revêtement absorbant le rayonnement est de la peinture noire.

4. Ensemble de thermostat suivant l'une quelconque des revendications 1 à 3, caractérisé en ce que lesdits moyens de mise en circulation de l'air dans le second espace sont constitués par une résistance (15) de faible puissance connectée en parallèle sur les bornes du thermostat (7) et disposée dans ledit second espace (11).

5. Ensemble de thermostat suivant l'une des revendications 1 à 4, caractérisé en ce que ledit premier espace est constitué par l'enceinte (2) du convecteur dans laquelle est disposée la résistance de chauffage ( 1) tandis que ledit second espace est constitué par un compartiment (11) formant cheminée faisant partie d'un boîtier (5) monté dans ladite enceinte (2) du convecteur et qui contient par ailleurs le thermostat (7) et l'interrupteur (9), la cloison de séparation entre lesdits premier et second espaces étant constituée par une paroi (16) dudit boîtier.

6. Ensemble de thermostat suivant l'une des revendications 1 à 5, caractérisé en ce que ledit compartiment (11) formant cheminée comporte une entrée d'air (13) qui se trouve en dehors de la zone d'influence par rayonnement de ladite résistance de chauffage (1).

7. Ensemble de thermostat suivant la revendication 5, caractérisé en ce que ledit boîtier (5) comporte outre le compartiment (11), un compartiment (6) pour la tête du thermostat et un compartiment (10) pour l'interrupteur (9).

8. Ensemble de thermostat suivant l'une des revendications 5 à 7, caractérisé en ce que le compartiment (11) formant cheminée qui constitue ledit second espace comporte un orifice (13) d'admission d'air froid et en ce qu'il est délimité par ladite paroi extérieure (16) du boîtier et par une paroi intérieure (22), des passages (23,24) pour l'élément sensible (8) étant ménagés dans lesdites parois extérieure (16) et intérieure (22).

9. Ensemble de thermostat suivant l'une des revendications 5 à 8, caractérisé en ce que ledit boîtier (5) est constitué de deux demi-boîtiers (5a,5b) en matière thermoplastique moulée maintenus en place par des moyens de fixation (17,18) complémentaires respectivement prévus sur les deux demi-boîtiers (5a, 5b) et en ce que ledit second espace (11) formant cheminée est formé d'une partie ménagée dans l'un (5a) desdits demi-boîtiers et complété par un compartiment (26) ménagé dans l'autre desdits demi-boîtiers.

10. Ensemble de thermostat suivant la revendication 9, caractérisé en ce que les passages (23, 24) pour l'élément sensible (8) sont constitués par des échancrures ménagées dans les portions de parois intérieure (11) et extérieure (16) de l'un (5a) desdits demi-boîtiers (5a,5b).

11. Convecteur électrique, caractérisé en ce qu'il est équipé d'un ensemble de thermostat suivant l'une des revendications 1 à 10.

**FIG.3**

**FIG1**

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 343 286  (LANDIS & GYR AG)<br>* Page 2, dernière ligne  -  page 3, ligne 27; figures 1,2 *<br><br>--- | 1-3,10 ,11 | G 05 D  23/275<br>H 01 H  37/14 |
| A | DE-A-2 416 886  (LICENTIA PATENT-VERWALTUNGS-GmbH)<br><br>*  Page  3,  dernier paragraphe - page 6, dernière ligne; figure *<br><br>--- | 1,5,6, 8,10, 11 | |
| A | US-A-3 834 618  (L.H.  KEENS)<br><br>* Colonne 5, ligne 27  -  colonne 6, ligne 34; figures 2,11 *<br><br>--- | 5,6,8, 9 | |
| A | US-A-4 191 879  (C.F.  KERCHNER Jr.)<br>* Résumé *<br><br>--- | 2,3 | DOMAINES TECHNIQUES RECHERCHES (Int. Cl.4)<br><br>G 05 D<br>H 01 H |
| A | GB-A-  829 314  (C.L. CHAMPION)<br>*  Page  3,  lignes 45-99; figures 2,3 *<br><br>--- | 4 | H 05 B |
| E | WO-A-8 603 035  (G. GIRAUD)<br><br>* Page 6,  ligne  10  -  page  7, ligne 22; figures 1,2 *<br><br>----- | 1-3,5, 6,8,11 | |

Le présent rapport de recherche a été établi pour toutes les revendications

| Lieu de la recherche | Date d'achèvement de la recherche | Examinateur |
|---|---|---|
| LA HAYE | 01-06-1987 | FOURRICHON,P.M.L. |